# EUROPEAN PATENT SPECIFICATION

(11) **EP 0 548 938 B1**
(45) Date of publication and mention of the grant of the patent: **11.09.1996**
(21) Application number: 92121869.9
(22) Date of filing: 23.12.1992
(51) Int. Cl.: B60R 1/06

(54) **Electrically foldable rearview mirrors**
Elektrisch schwenkbare Rückspiegel
Rétroviseurs rabattables électriquement

(30) Priority: 26.12.1991 JP 112134/91 U
(43) Date of publication of application: 30.06.1993
(73) Proprietor: MURAKAMI KAIMEIDO CO., LTD, Shizuoka-Ken, 422 (JP)
(72) Inventor: Sato, Hidenori, Shizuoka-ken, 426 (JP); Iwanabe, Naoto, Shizuoka-ken, 426 (JP)
(74) Representative: Riederer Freiherr von Paar zu Schönau, Anton

(56) References cited:
- EP-A- 0 305 590
- EP-A- 0 333 901
- JP-U-63 169 341
- US-A- 4 981 349

## Description

### Background of the Invention

The present invention relates to a control system for electrically foldable rear view mirrors of a motor vehicle.

Normally, electrically foldable rear view mirrors for a motor vehicle are respectively provided at the outside of the vehicle for the driver to confirm the state of the backward motor vehicle during driving, and are folded by a contained electric motor if necessary or are erected to the erecting state during driving. As disclosed by Japanese Utility Model Registration Application Laid Open No. Sho 63-169341, the electrically foldable rear view mirror is composed of a shaft erected on an extension of a base fixed to a door panel or to a quarter window of the vehicle, a spring and a clutch gear respectively received in a frame and into which the shaft is inserted, and a clutch retainer pressed by said spring and thereafter being fixed to the shaft. The clutch gear is adapted to engage with a pinion gear which is rotated by the electric motor contained in a mirror body through the intermediary of a speed reduction mechanism, and the mirror body is rotated centered around the shaft by actuating the electric motor.

Methods of controlling in the erected state or a folded state of the electrically foldable rear view mirrors, for breaking the motor control circuit after the mirror body has been regulated to stop its rotation by a rotation stop means, are described hereinbelow. In one of the above methods, means for changing the circuit are provided at the rotating parts between the clutch retainer fixed on said shaft and the mirror body, thereby a folding circuit is changed to an erecting circuit and vice versa and the motor control circuit is interrupted when the mirror body rotates and reaches the folded state or the erected state. In such conventional control system, it is difficult to adjust a position to change the circuit at the erected state or at one of the folded states of the mirror body, also because of using a slide contact system therein, there happening problems of an imperfect contact on the rotating contact surface or a foreign material contamination or the like, and the circuit composition is complicated.

In another method, the load current of the motor is checked for interrupting said control circuit (e.g. in US-A 4 981 349). In such method of detecting the load current of the motor, because of the environment factor at the time of the mirror rotating, friction may vary on the slide rotating surface due e.g. to a foreign contamination or a thermal variation, and a load fluctuation of the motor is caused to make the correct stopping of the mirror body impossible.

### Summary of the Invention

The object of the present invention is to provide a control system for electrically foldable rear view mirrors, improved with reference to the problems described above, having a simple circuit composition capable of actuating accurately, and wherein the mirror body is correctly supported at the stopping position of the erected and folded state.

To achieve the object described above, in the control system of an electrically foldable rear view mirror which system comprises a base, a shaft erected on the base side, a mirror body of rear view mirror provided on the root portion of the shaft, a drive of the mirror body, said drive comprising a reversible motor contained in the mirror body, a motor control circuit actuating the motor to rotate the mirror body between an erected state and a folded state, a rotation stop means to certainlay stop the rotation of said mirror body at the erected state and the folded state, a detective sensor for detecting the stop of the motor rotation following the stop of the mirror body rotation, and a control means breaking the motor control circuit after the sensor detecting the stop of the motor, according to the present invention the detective sensor is a contactless sensor detecting the frequency of the rotation of the drive of the mirror body, preferably the rotation of the motor.

Said control means preferably comprises a power circuit, a switching circuit for putting the motor control circuit ON/OFF, a sensor circuit outputting a pulse chain corresponding to the rotation frequency of the motor, a switching transistor connected to said sensor circuit, a differentiation circuit connected to the base of the switching transistor and a control input circuit to input said pulse chain to charge and discharge a capacitor of said differentiation circuit to put said transistor ON/OFF. The motor is composed so as not to have a sufficient torque to run over said rotation stop means but rather its rotation being locked to stop at the erected and the folded state such that the rotation of the mirror body is stopped. Said contactless detective sensor may comprise a reflecting plate or a magnet attached to the motor axis, and a photo reflector or a magnetically sensitive element formed on the printed circuit board for detecting the frequency of the rotation.

The reflecting rotating plate or the magnet is preferably attached on the motor axis and the photo emitter and sensor or the magnetic sensitive element is attached to the base plate, thereby a pulse signal synchronized with the motor rotation is output from the sensor circuit and is input ot the control input circuit, and the electric charge and discharge of the capacitor of the differentiation circuit of said control input circuit is repeated to continue the motor actuation through the switching circuit. When thereafter the motor rotation is stopped, also said electric discharge is stopped, thereby the switching transistor of said switching circuit is put to OFF and the relay is opened to break the motor control circuit.

### Brief Description of the Drawings

These and other objects and the attendant advantages of this invention will be readily appreciated as the same becomes better understood by reference to the following detailed description when considered in connection with the accompanying drawing.
- Fig. 1: is a partial cut-away front view of an electrically foldable rearview mirror provided with a control system according to the present invention.
- Fig. 2: is a perspective view of the embodiment in which a reflecting type photoreflector is used as an anti-contact detective sensor of the control system for the electrically foldable rearview mirror according to the present invention.
- Fig. 3: is an enlarged side view of the detective sensor of Fig. 2.
- Fig. 4: is a side view of the embodiment in which a magnet and a magnetic sensitive element are used as the sensor.
- Fig. 5: is a schematic diagram of the control circuit of the control system according to the present invention; and
- Fig. 6: is a timing chart of Fig. 5.

### Description of the Preferred Embodiments

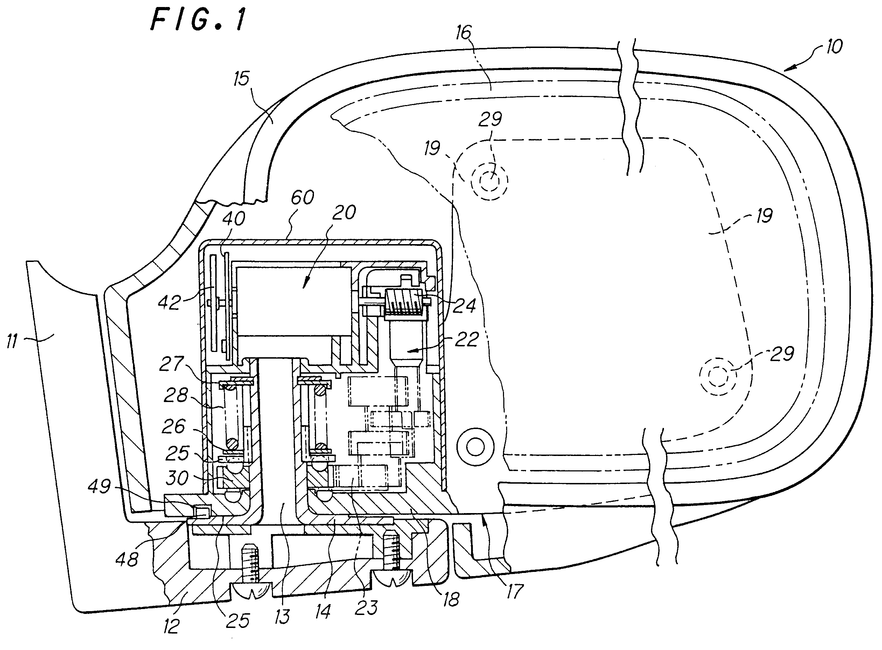

The present invention will now be described in detail with reference to the drawings. Referring first to Fig. 1, there is shown an electrically foldable rearview mirror 10 which includes a mirror body 15 rotatably supported on a hollow shaft 13 which is erected on an extension 12 of a base 11, an electric device (motor) 20 and a reduction train 22 contained in a base portion 18 of a frame 17, and a clutch gear 30 provided around the shaft so as to be fixed to the shaft at the time of the mirror being electrically folded and to be free from the shaft at the time of the mirror being rotated enforcedly. The reduction train 22 is connected at one end with a worm 24 mounted on an output shaft 21 of the electric device 20 and at the other end is engaged with the clutch gear 30 mounted on the shaft 13 via the end gear 23 of the reduction train 22. In Fig. 1, the numeral 40 indicates a printed circuit board for the motor control circuit, and 60 indicates a sealing cap to cover the whole electric device.

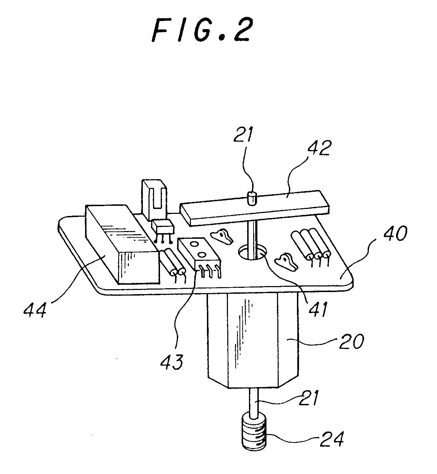

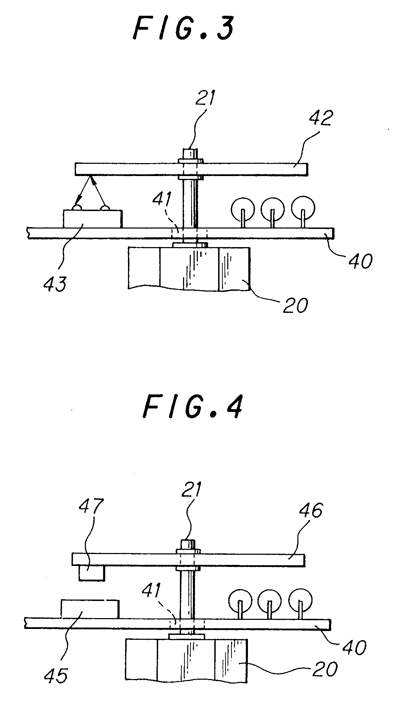

The frame 17 comprises the base portion 18 having a hole to receive the shaft 13 and a wing portion 19 substantially vertically erected from an end of the base portion 18. The wing portion 19 is secured to the inner wall of the mirror body 15 by several screws 29 and the actuator unit for adjusting the reflecting angle of a mirror element 16 attached to it is intermediary disposed at the front surface of the mirror body 15. To achieve a smooth rotation sliding with centering around the shaft, the bottom surface of the base portion 18 of the frame is subject to contact the upper surface of the extension 12. The clutch gear 30, a ball guide 25, a washer 26, and a spring retainer 27 are orderly inserted on and engaged with the shaft 13 penetrating through the hole of the frame base portion 18, and further a coil spring 28 is condensed between the washer 26 and the spring retainer 27. The numeral 48 indicates a convex portion which is provided at the root portion of the shaft, for regulating the rotation of the mirror body, and 49 indicates a concave portion (recession) provided on the frame base portion. As enlarged depicted in Fig. 2 and Fig. 3, in the printed circuit board 40 for the motor control circuit, a hole 41 is provided at substantially the center of the printed circuit board 40 to receive the shaft 21. The shaft 21 protrudes to the side of the worm 24 being attached thereto and to the opposite side thereof where a reflecting rotation board 42 is secured at the end of said shaft. On the surface of the printed circuit board 40, a reflectable photoreflector 43, i.e. a light emitter and receiver, a relay circuit 44 and other electric assembly are arranged.

Fig. 4 shows a modified embodiment of a control system for the electrically foldable rearview mirror, in which in place of the photoreflector, a magnetic sensitive element 45 is provided and corresponding thereto, a magnet 47 is attached at the end surface of a disk 46.

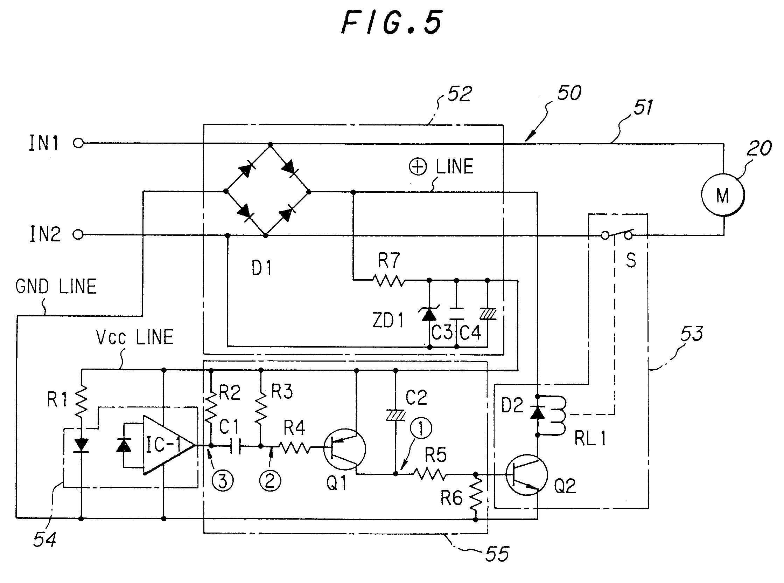

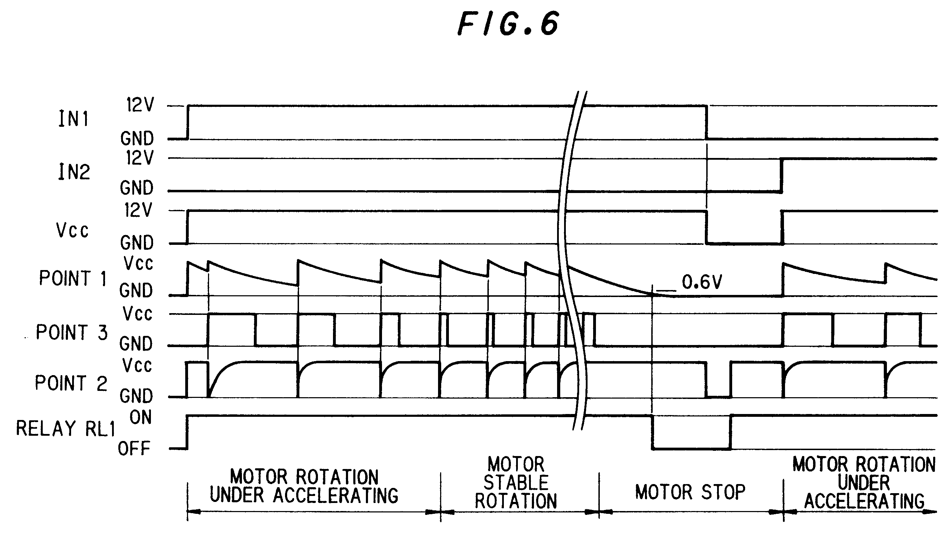

Fig. 5 is a schematic diagram of one embodiment of the control system according to the present invention, in which a controller 50 is composed of a control circuit 51 for the motor 20, a power circuit 52, a switching circuit 53, a sensor circuit 54 and a control input circuit 55. The power circuit 52 is connected to power terminals IN1 and IN2, and comprises a bridge rectifier D1, a resistor R7, Zener-Diode ZD1, and a stabilized power source composed of capacitors C3, C4. The switching circuit 53 comprises a switching transistor Q2 and a relay RL1, in which when the switching transistor Q2 is put to ON, the relay RL1 is actuated so as to actuate the motor control circuit 51 through an intermediary of relay contact S. In the sensor circuit 54, an output of the photoreflector or of the magnetically sensitive element is amplified by an operation amplifier IC-1 so that as shown at a point ③ in Fig. 6, a pulse output synchronized to the rotation of the motor 20 is supplied to the input of the control input circuit 55. The control input circuit 55 includes a transistor Q1, a resistor R4 and a differentiation circuit (a capacitor C1, a resistor R3) respectively connected to the base side of said transistor Q1, and a differentiation circuit (a capacitor C2, a resistor R5) connected to the collector side of transistor Q1. The above mentioned pulse is input to the transistor Q1 through the differentiation circuit (capacitor C1, resistor R3) and resistor R4, connected to the base side of transistor Q1, and from the collector electrode of the transistor Q1 the pulse is output to the base of the switching transistor Q2 through the differentiation circuit (capacitor C2, resistor R5).

The operation of the control system for the electrically foldable rearview mirrors will be described hereinafter with reference to the schematic diagram of Fig. 5 and the time chart of Fig. 6 by the following steps (1) to (10):
(1) For rotating the motor 20 in one direction, the positive electricity is input to the power terminal IN1 and the negative electricity is input to the terminal IN2, and the positive electric potential is supplied to the resistor R7 from said power terminal IN1 through the bridge rectifier circuit D1. (For the other direction of rotation, the polarities at the terminals IN1 and IN2 are inverted, still the positive potential being supplied to R7).
(2) Collector supply voltage (Vcc) (5V) is supplied by the stabilized power source composed of the resistor R7, Zener-Diode ZD1, the capacitor C3 and the capacitor C4.
(3) While the voltage Vcc is high, the switching transistor Q2 is still in the status of being turned ON during a certain time controlled by the differentiation circuit composed of the capacitor C2 and the resistor R5.
(4) The switching transistor Q2 being turned ON, the relay RL1 is actuated to put the relay contact S ON, and the motor control circuit 51 is actuated to rotate the motor.
(5) The reflecting rotation board 42 attached to the motor axis 21 starts to rotate and to run over the photoreflector 43 when the motor 20 starts to rotate, and the sensor circuit 54 outputs pulses synchronized to the rotation of the motor (point ③).
(6) Said pulses are input to the control input circuit 55, the rising frequency of the pulses is detected by the differentiation circuit composed of the resistor R3 and the capacitor C1, and the transistor Q1 is put to ON during only a time dependent from a time constant determined by the resistor R3 and the capacitor C1 (put to ON at the transition of the point ②).
(7) The transistor Q1 being turned ON, the electric charge stored in the capacitor C2 of the differentiation circuit composed of the capacitor C2 and the resistor R5 is discharged rapidly (point ①).
(8) The transistor Q1 is turned OFF, the certain time of step (3) determined by the differentiation circuit composed of the capacitor C2 and the resistor R5 is reset to start again and the ON state of the switching transistor Q2 continues.
(9) The mirror body rotates and reaches the rotation limit position of the erected state or the folded state, whereupon the motor is stopped (the state of being locked) and the rotation of the reflecting rotation board 42 is also stopped, thereby the pulse output from the sensor circuit 54 is stopped to leave the transistor Q1 being put OFF.
(10) Since the discharging of the capacitor C2 is no longer practiced, the switching transistor Q2 is put to OFF and thereafter the relay RL1 is put to OFF. According to the actuation of the control system described above, the relay contact S is also put to OFF and the motor control circuit 51 is stopped to cut the electricity supply to the motor.

As described above, the mirror body is accurately stopped at the said rotation limit position. Further said sensor circuit 54 is provided on the printed circuit board 40 to enable a simple wiring and a simple circuit composition.

According to the control system for the electrically foldable rearview mirror of the present invention, it is possible to design a simple circuit composition and to decrease the number of assemblies. The sensor circuit enabling to be assembled with the printed circuit board, it is possible to decrease the wiring steps and it is possible to increase the accuracy of the mirror body stopping position, thereby it is capable of safely practicing to maintain the mirror body stopping at the erected state and at the folded state.

In short, the described invention concerns a control system for an electrically foldable rearview mirror which enables to stop the power supply of the motor (20) rocking the mirror body, positively at stop positions in the erected state or one of the folded states of the mirror body. The electrically foldable rearview mirror comprises a rotation stop means positively stopping the rotation of the mirror body at the erected state and the folded states, and is provided with a contactless detective sensor (54) for detecting the stop of the motor rotation when the mirror body is stopped by the rotation stop means, and with a control means (53) for breaking the motor control circuit (51) by a detective signal from the detective sensor.

## Claims

1. A control system for an electrically foldable rear view mirror (10) comprising:
a base (11);
a shaft (13) erected on the base (11);
a mirror body (15) of the rear view mirror (10), mounted on the shaft (13);
a drive of the mirror body, comprising a reversible motor (20) contained in the mirror body (15);
a motor control circuit (51) actuating the motor (20) to rotate the mirror body (15) between an erected state and a folded state;
a rotation stop means (48, 49) to positively stop the rotation of said mirror body at the erected state and the folded state;
a detective sensor (43, 45; 54) for detecting the stop of the motor rotation following to the stop of the mirror body rotation; and
a control means (53, 55) breaking the motor control circuit (51) after the sensor (43, 45; 54) detecting the stop of the motor (20);
characterized in that the detective sensor (43, 45; 54) is a contactless sensor detecting the frequency of the rotation of the drive of the mirror body (15).

2. A control system for an electrically foldable rearview mirror as defined in claim 1, characterized in that said control means comprises a power circuit (52), a switching circuit (53) for putting the motor control circuit (51) ON/OFF, a sensor circuit (54) outputting a pulse chain corresponding to the rotation frequency of the motor (20), a switching transistor (Q2) connected to said sensor circuit (54), a differentiation circuit (C2, R5) connected to the base of the switching transistor (Q2) and a control input circuit (55) inputting said pulse chain to charge and discharge a capacitor (C2) of said differentiation circuit (C2, R5) to put said transistor (Q2) ON/OFF.

3. A control system for an electrically foldable rearview mirror as defined in claim 1 or 2, characterized in that said rotation stop means is provided on the root portion of the shaft (13) and is formed by convex and concave portions (48, 49), and said motor (20) is dimensioned not to have a torque sufficient to run over said rotation stop means but its rotation to be locked when reaching the erected and the folded state of the mirror body (15).

4. A control system for an electrically foldable rearview mirror as defined in any of claims 1 to 3, characterized in that the contactless detective sensor (43, 45) detects the speed of rotation of the motor (20).

5. A control system for an electrically foldable rearview mirror as defined in claim 4, characterized in that said contactless detective sensor comprises a reflecting plate (42) attached to the motor axis (21) and a photo reflector (43) formed on a printed circuit board (40).

6. A control system for an electrically foldable rearview mirror as defined in claim 4, characterized in that said contactless detective sensor comprises a magnet (47) attached to the motor axis (21) and a magnetically sensitive element (45) formed on a printed circuit board (40).

## Patentansprüche

1. Steuersystem für einen elektrisch klappbaren Rückblickspiegel (10) mit:
einer Basis (11);
einem Achsbolzen (13), der von der Basis (11) nach oben absteht;
einem auf dem Achsbolzen (13) montierten Spiegelkörper (15) des Rückblickspiegels (10);
einem einen reversiblen Motor (20), der im Spiegelkörper (15) enthalten ist, umfassenden Antrieb des Spiegelkörpers;
einem Motorsteuerstromkreis (51), der den Motor (20) dazu betätigt, den Spiegelkörper (15) zwischen einem ausgestellten Zustand und einem eingeklappten Zustand zu verdrehen;
einer Verdrehungs-Stoppeinrichtung (48, 49) zum zwangsläufigen Anhalten der Verdrehung des Spiegelkörpers im ausgestellten Zustand und im eingeklappten Zustand;
einem Erkennungssensor (43, 45; 54) zum Feststellen des Anhaltens der Motordrehung auf das Anhalten der Spiegelkörperverdrehung hin; und
einer Steuereinrichtung (53, 55), die den Motorsteuerstromkreis (51) nach der Feststellung des Anhaltens des Motors (20) durch den Sensor (43, 45; 54) unterbricht;
dadurch gekennzeichnet, daß der Erkennungssensor (43, 45; 54) ein kontaktloser Sensor ist, der die Frequenz der Drehung des Antriebs des Spiegelkörpers (15) feststellt.

2. Steuersystem für einen elektrisch klappbaren Rückblickspiegel nach Anspruch 1, dadurch gekennzeichnet, daß die Steuereinrichtung eine Stromversorgungsschaltung (52), eine Schalteranordnung (53) zum Ein- bzw. Ausschalten des Motorsteuerstromkreises (51), eine Sensorschaltung (54), die eine der Drehfrequenz des Motors (20) entsprechende Impulskette abgibt, einen Schalttransistor (Q2), der mit der Sensorschaltung (54) verbunden ist, eine Differenzierschaltung (C2, R5), die mit der Basis des Schalttransistors (Q2) verbunden ist, und eine Steuereingangsschaltung (55), der die Impulskette zum Laden und Entladen eines Kondensators (C2) der Differenzierschaltung (C2, R5) zum Leitendmachen und Sperren des Transistors (Q2) eingespeist ist, umfaßt.

3. Steuersystem für einen elektrisch klappbaren Rückblickspiegel nach Anspruch 1 oder 2, dadurch gekennzeichnet, daß die Verdrehungs-Stoppeinrichtung sich am Fußteil des Achsbolzens (13) befindet und durch konvexe und konkave Teile (48, 49) gebildet ist und der Motor (20) so dimensioniert ist, daß sein Drehmoment nicht ausreicht, über die Verdrehungs-Stoppeinrichtung zu laufen, sondern die Drehung blockiert wird, wenn der ausgestellte und der eingeklappte Zustand des Spiegelkörpers (15) erreicht sind.

4. Steuersystem für einen elektrisch klappbaren Rückblickspiegel nach einem der Ansprüche 1 bis 3, dadurch gekennzeichnet, daß der kontaktlose Erkennungsensor (43, 45) die Drehzahl des Motors (20) feststellt.

5. Steuersystem für einen elektrisch klappbaren Rückblickspiegel nach Anspruch 4, dadurch gekennzeichnet, daß der kontaktlose Erkennungssensor eine reflektierende Platte (42), die an der Motorwelle (21) befestigt ist, und einen Fotoreflektor (43), der auf einer Karte mit gedruckter Schaltung (40) sitzt, umfaßt.

6. Steuersystem für einen elektrisch klappbaren Rückblickspiegel nach Anspruch 4, dadurch gekennzeichnet, daß der kontaktlose Erkennungssensor einen Magnet (47), der an der Motorwelle (21) befestigt ist, und ein magnetisch sensitives Element (45), das auf einer Karte mit gedruckter Schaltung (40) sitzt, umfaßt.

## Revendications

1. Système de commande pour un rétroviseur (10) rabattable électriquement, comprenant :
une base (11);
un axe (13) s'élevant sur la base (11);
un corps (15) du rétroviseur (10), monté sur l'axe (13);
une unité d'entraînement du corps du rétroviseur, comprenant un moteur reversible (20) contenu dans le corps (15) du rétroviseur;
un circuit (51) de commande du moteur, qui actionne le moteur (20) pour faire tourner le corps (15) du rétroviseur entre un état déployé et un état rabattu;
des moyens d'arrêt de rotation (48,49) pour arrêter positivement la rotation dudit corps du rétroviseur dans l'état déployé et dans l'état rabattu;
un capteur de détection (43,45;54) pour détecter l'arrêt de la rotation du moteur à la suite de l'arrêt de la rotation du corps du rétroviseur; et
des moyens de commande (53,55) interrompant le circuit (51) de commande du moteur une fois que le capteur (43,45;54) a détecté l'arrêt du moteur (20);
caractérisé en ce que le capteur de détection (43,45;54) est un capteur sans contact qui détecte la fréquence de la rotation de l'unité d'entraînement du corps (15) du rétroviseur.

2. Système de commande pour un rétroviseur rabattable électriquement selon la revendication 1, caractérisé en ce que lesdits moyens de commande comprennent un circuit d'alimentation (52) et un circuit de commutation (53) pour activer/désactiver le circuit (51) de commande du moteur, un circuit à capteur (54) délivrant une suite d'impulsions correspondant à la fréquence de rotation du moteur (20), un transistor de commutation (Q2) raccordé audit circuit à capteur (54), un circuit de différentiation (C2,R5) connecté à la base du transistor de commutation (Q2) et un circuit d'entrée de commande (55) introduisant ladite suite d'impulsions pour charger et décharger un condensateur (C2) dudit circuit différentiateur (C2,R5) pour placer ledit transistor (Q2) à l'état conducteur/bloqué.

3. Système de commande pour un rétroviseur rabattable électriquement selon la revendication 1 ou 2, caractérisé en ce que lesdits moyens d'arrêt de la rotation sont prévus sur la partie de base de l'axe (13) et sont formés par des parties convexes et concaves (48,49), et ledit moteur (20) est dimensionné de manière à ne pas posséder un couple suffisant pour dépasser lesdits moyens d'arrêt de rotation, mais de manière que sa rotation soit bloquée lorsque le corps (15) du rétroviseur atteint l'état déployé et l'état rabattu.

4. Système de commande pour un rétroviseur rabattable électriquement selon l'une quelconque des revendications 1 à 3, caractérisé en ce que le capteur de détection sans contact (43,45) détecte la vitesse de rotation du moteur (20).

5. Système de commande pour un rétroviseur rabattable électriquement selon la revendication 4, caractérisé en ce que ledit capteur de détection sans contact comprend une plaque réfléchissante (42) fixée à l'axe (21) du moteur et un réflecteur photosensible (43) formé sur une plaquette à circuits imprimés (40).

6. Système de commande pour un rétroviseur rabattable électriquement selon la revendication 4, caractérisé en ce que ledit capteur de détection sans contact comprend un aimant (47) fixé à l'axe (21) du moteur, et un élément sensible magnétiquement (45) formé sur une plaquette à circuits imprimés (40).
